Europäisches Patentamt

European Patent Office

Office européen des brevets

(11) Publication number: **0 352 051**

A2

## (12) EUROPEAN PATENT APPLICATION

(21) Application number: 89307238.9

(22) Date of filing: 17.07.89

(51) Int. Cl.4: **B60K 41/06**

(30) Priority: 16.07.88 GB 8817002

(43) Date of publication of application:
24.01.90 Bulletin 90/04

(84) Designated Contracting States:
DE FR GB IT SE

(71) Applicant: LUCAS INDUSTRIES public limited
company
Great King Street
Birmingham, B19 2XF West Midlands(GB)

(72) Inventor: Bodley-Scott, Jamie
Fir Tree Cottage, Lower Town
Fern Hill Heath, Worcester(GB)
Inventor: Harris, Anthony Paul
45 Newland Mill
Witney, Oxten(GB)

(74) Representative: Goodman, Christopher et al
Eric Potter & Clarkson 14 Oxford Street
Nottingham NG1 5BP(GB)

(54) Engine torque control system.

(57) The system operates to reduce the torque delivered by the engine only if one or more engine variables are above preset limits thereby ensuring that the engine torque reduction system will not be operative during conditions in which the engine may stall when the torque is reduced.

Fig. 3

EP 0 352 051 A2

## ENGINE TORQUE CONTROL SYSTEM

The present invention related to engine torque control systems and more particularly to a system for reducing engine torque during automatic gear changes.

Automatic transmissions are known to experience problems when combined with extremely powerful engines in particular those which are supercharged or turbocharged. The automatic change in particular in the lower gears can result in damage to components if the engine is being driven hard. The effect is felt as a severe jolt to the vehicle occupants resulting from the rapid engagement of components rotating with different speeds causing the engine to be lowed and thin produces the high torque. Damage can be caused to both engine and/or transmission system components.

To reduce the possibility of damage to engine and/or transmission components it is advantageous to reduce the torque developed by the engine during critical periods such as during a gear upshift. This can be accomplished by for example retarding the ignition, or in a turbo-charged engine adjusting the manifold pressure by means of the wastegate control for a brief period only.

A problem which has been found to occur with this torque reduction technique is that in some circumstances, for example at low speeds the engine may stall. This may be as a result of hard braking at low vehicle speeds in for example first or second gear. Also if during normal driving an engine driven component fails, for example a water pump bearing seizure, then the deceleration produced by much a seizure may cause the torque reduction techniques to become operative leading to a momentary further deceleration of the engine thereby cumulatively causing the engine to stall. This is obviously undesirable during normal driving conditions. It is preferable in most cases for the engine to continue to drive normally even if this results in total destruction of the component since this will enable the driver to stop the vehicle at a safe location selected by the driver rather than to be forced to stop in a possibly dangerous location.

It is an object of the present invention to provide an engine torque control system which will reduce engine torque during required periods and which also reduces the tendency of an engine to stall during much periods by preventing much torque reduction under specified conditions.

According to the present invention there is provided an engine torque control system including means for monitoring engine deceleration and means for sensing at least one engine variable and including means for producing a control output to cause a reduction in engine torque only when the engine deceleration exceeds a predetermined value and the engine variable is outside a predetermined safety limit.

In a preferred embodiment the engine variable comprises engine speed (revolutions) or throttle setting or manifold pressure.

In a further preferred embodiment all three above variables are monitored and engine torque is reduced only when all three variables are above predetermined safety limits and the deceleration exceeds the predetermined value.

In a particular embodiment engine torque is reduced by a rapid alteration of engine timing towards or past Top Dead Centre (TDC) thin being followed a set time interval later by a first incremental step altering the timing back towards its previous setting and by further incremental steps thereafter at predetermined time intervals or following a predetermined number of engine revolutions. In a preferred embodiment the set time interval is 250 milliseconds. This time interval may be varied with engine/gearbox temperature being lengthened when the engine/gearbox is cold and being shortened as the engine/gearbox warms up and may be reduced to zero in some embodiments.

In a further embodiment the engine variables may also comprise air temperature or water temperature and the torque reduction may be reduced only when one or both of these variables is above or below a predetermined value

According to the present invention there is also provided a method for generating a torque reduction signal for activating torque reducing apparatus in an internal combustion engine of a vehicle equipped with automatic transmission during a gear shifting operation of the automatic transmission comprising the steps of

generating a first signal the value of which changes in correspondence to an engine variable,

comparing the value of the first signal with a first preset limit,

generating in response to engine speed a second signal which changes in correspondence to the deceleration experienced by the engine during a gear shifting operation of the automatic transmission,

comparing the value of the second signal with a second preset limit,

generating a torque reduction signal only if the value of the first signal falls outside the first preset limit and if the second signal falls outside the second preset limit.

Preferably the present invention provides a method for comparing a plurality of signals the values of which respectively change in correspondence with a plurality of engine variables, each signal being compared with a respective preset limit and an engine torque reduction signal being generated only when all of the respective plurality of signals fall outside their respective preset limits and when a signal representative of the deceleration of the engine falls outside a respective preset limit.

In a preferred embodiment the plurality of engine variables may comprise engine speed, throttle setting, manifold pressure, engine water temperature or ambient air temperature.

Embodiments of the present invention will now be described by way of example, with reference to the accompanying drawings, in which:-

Figure 1 shows a graph of engine speed (RPM) against time illustrating the principle of the torque reduction technique;

Figure 2a, b and c show graphs of engine operating characteristics;

Figure 3 shows a flow diagram illustrating the engine torque control system according to the present invention;

Figure 4 shows a graph of torque and engine speed against time for an engine without any torque reduction; and

Figure 5 shows a graph of torque and engine speed against time for an engine with the torque control system according to the present invention.

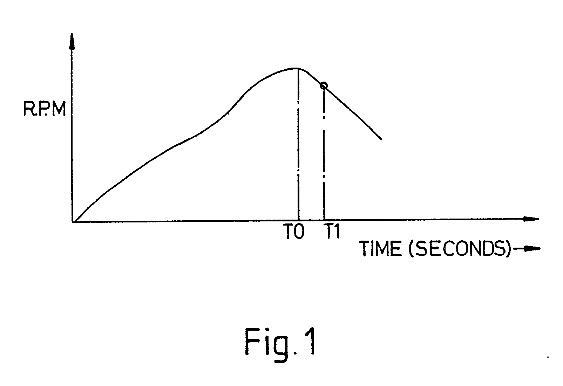

With reference now to Figure 1, in an automatic transmission vehicle the engine speed (RPM) rises as the engine accelerates reaching a predetermined maximum at a time TO at which in known manner the automatic transmission effects a gear change thus reducing engine speed as the next gear begins to engage. It is after this point that torque levels may be exceeded and this is determined in accordance with the present invention by monitoring the rate of change of engine speed at a time T1. If this rate of change is too great then severe torque loadings may be present and damage may result.

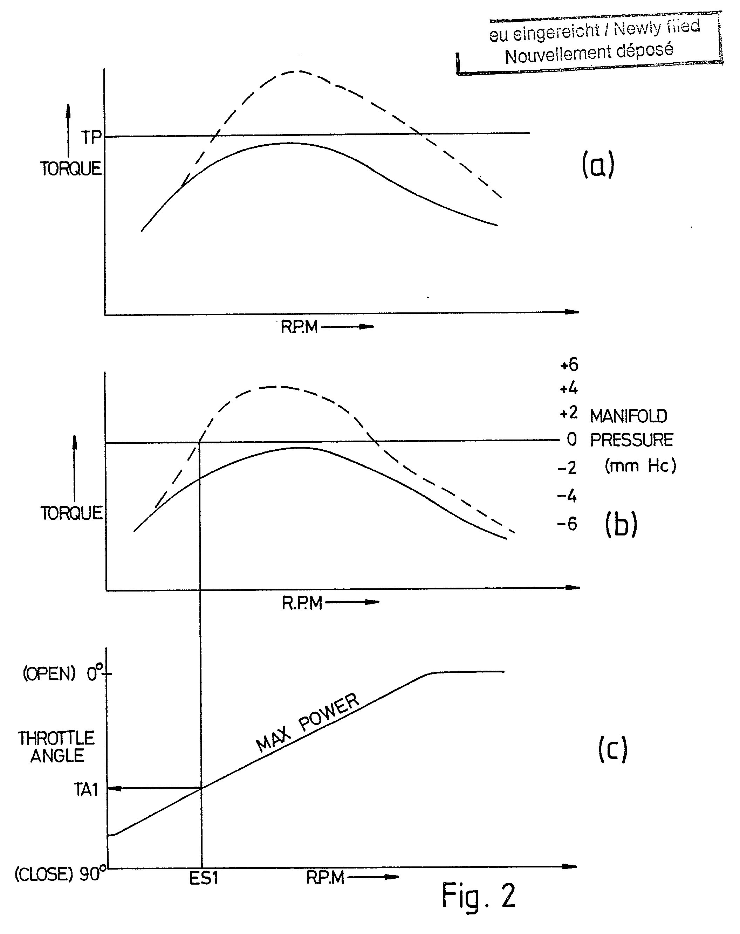

Figure 2a shows a forced induction (dotted line) and normally aspirated engine graph of maximum torque against engine RPM. It may be seen that the forced induction engine torque readily exceeds a predetermined level TP whereas the normally aspirated engine has lower maximum torque for a particular engine speed.

With reference to Figures 2b and 2c the maximum torque and throttle angle required for maximum power are compared with engine RPM. It may be seen that the torque level TP is only exceeded if the engine speed is above a particular value ES1 (for any particular design of engine) and that this is at or above a particular throttle opening TA1.

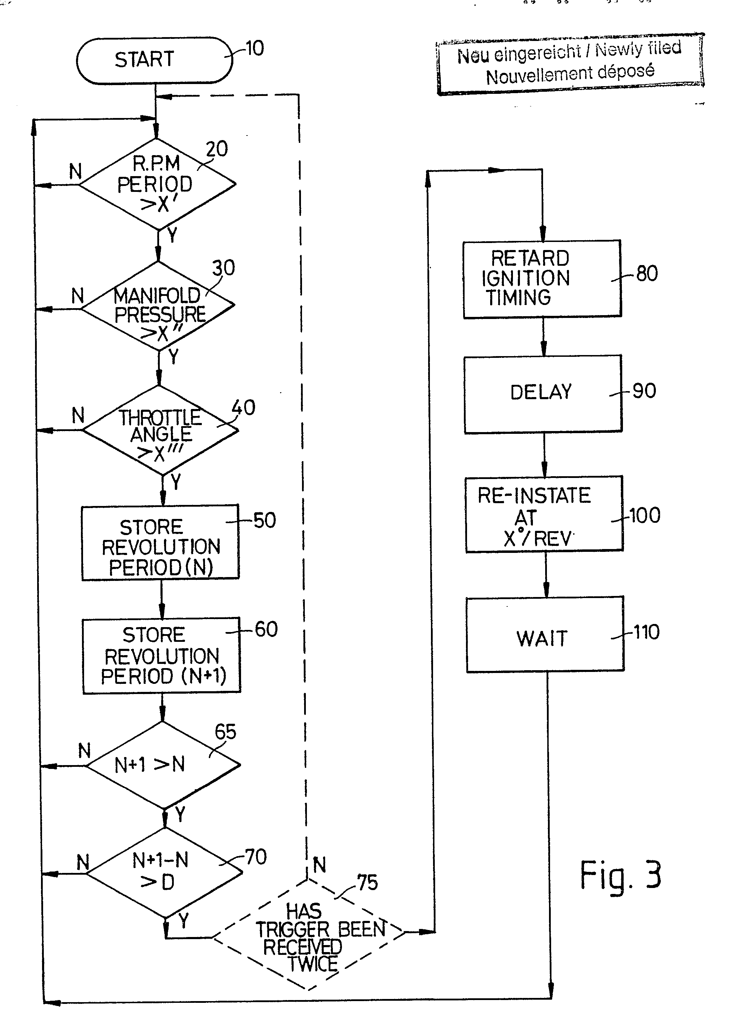

In the present invention, with reference also to Figure 3 the torque control system is only operative if one or more of specified engine variables is above a particular value. Thus for example if the speed is below ES1 then the engine torque is not reduced.

In the example shown in Figure 3 three variables must be exceeded to allow a torque reduction to take place. The system is shown as a computerised flow chart for implementation by an engine control computer but could readily be configured in hardware using suitable comparators and timing circuits.

In Figure 3 the system runs continuously to monitor the various variables. The start 10 is initiated by the ignition key indicating that the engine is running. Firstly the engine speed is interrogated 20 and if too low the process is restarted. If the engine speed is above the preset level then the manifold pressure is interrogated 30 and if this is too low the process is restarted. If the manifold pressure is above the preset level then the throttle opening is interrogated 40 and if this is below the level then the process is restarted. If all three variables at steps 20, 30 and 40 are above their preset levels then the period of a first engine revolution N is stored 50 and then the period of the next revolution (N + 1) is stored at step 60.

These two values stored at steps 50 and 60 are compared 65. If $N + 1 \leq N$ then the engine is not decelerating and a "NO" answer is given, the process then being restarted. If $N + 1 > N$ then the engine is decelerating and a "YES" answer is given. The difference in value $(N + 1)-(N)$ is then calculated in block 70 and this difference is compared with a detect factor D. If the result is positive i.e. $(N + 1)-N > D$ then the torque reduction is triggered. If negative then the process is restarted.

In an exemplary practical system the engine is assumed to be running at a speed of 3,333 r.p.m. giving a time for revolution N of 300 μ secs. The engine is then assumed to decelerate in one revolution to a speed of 3,225 r.p.m. (i.e. a deceleration of 108 r.p.m. in one revolution) this giving a time for revolution N + 1 of 310 μ secs. Factor D is assumed set at 9 μ sec and therefore the difference of 10 μ sec between revolution N and N + 1 exceeds this and the torque reduction process is commenced.

Assume now that the engine is initially running at a speed of 2,000 r.p.m. giving a time for revolution of 500 μ secs. The engine is then assumed to decelerate in one revolution to a speed of 1,960 r.p.m. (i.e. a deceleration of 40 r.p.m. in one revolution) this giving a time for revolution N + 1 of 510 μ secs. Factor D being set at 9 μ secs this difference exceeds the factor and thus the torque reduction process takes place.

Thus with reference to the two examples it is clear that because factor D is a constant the system becomes more sensitive at lower engine speeds. Block 20 however ensures that the system is disabled at a defined low engine speed thereby ensuring that normal engine deceleration does not actuate the torque reduction process.

By measuring the period of engine revolution and using this information directly (without converting to speed) the implementation of the system is much easier as no division (reciprocals) have to be computed - which would be relatively slow.

As indicated in dotted outline in block 75 as a safety check the program will loop back to the start once a trigger condition is met and only when this trigger condition is given twice will the ignition be altered (block 80). This avoids problems of false triggering due to noise.

The torque reduction process comprises an instantaneous (within the engine management system's capability) retardation of the ignition towards TDC 80 (or a change in wastegate control to provide less boost) to lower the engine torque immediately.

The ignition setting is then reinstated following a delay 90 at $X^{\circ}$ per revolution 100 (say for example X = 0.01 to 0.1)) to bring the engine power back to a required level within a fairly short period of time. It is possible to vary X with engine settings thereby altering the number of revolutions that it takes for the timing to be returned. Delay 90 is in a preferred embodiment a set time delay which can be selected to suit particular engined Delay 90 can be zero.

The system then waits for M revolutions or a set time delay 110 before recommencing a further cycle. This is to ensure that backlash effects from the transmission are ignored.

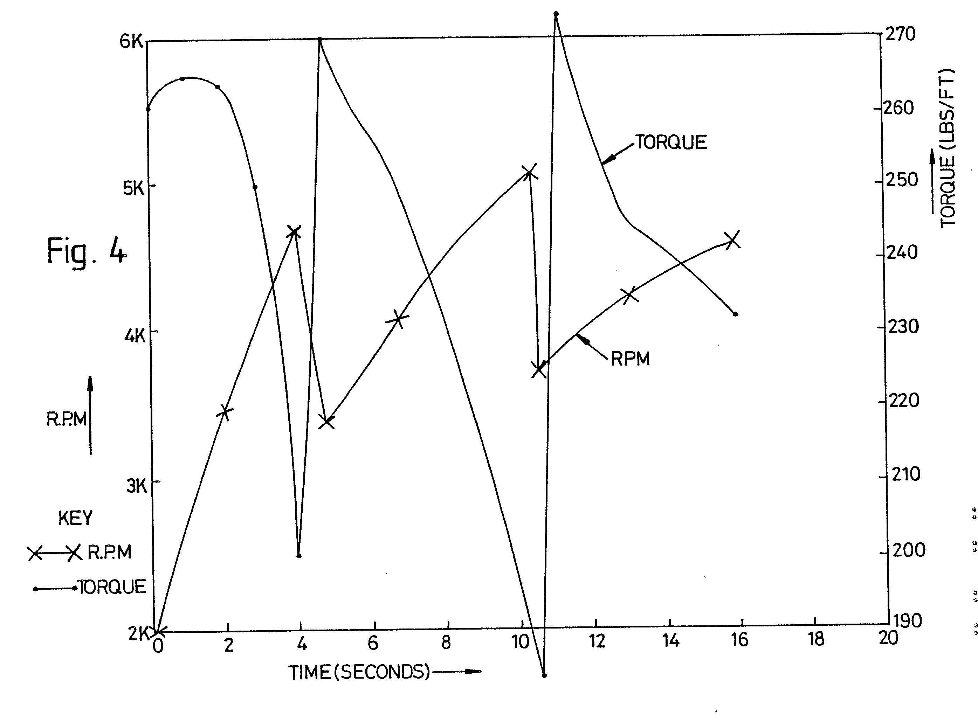

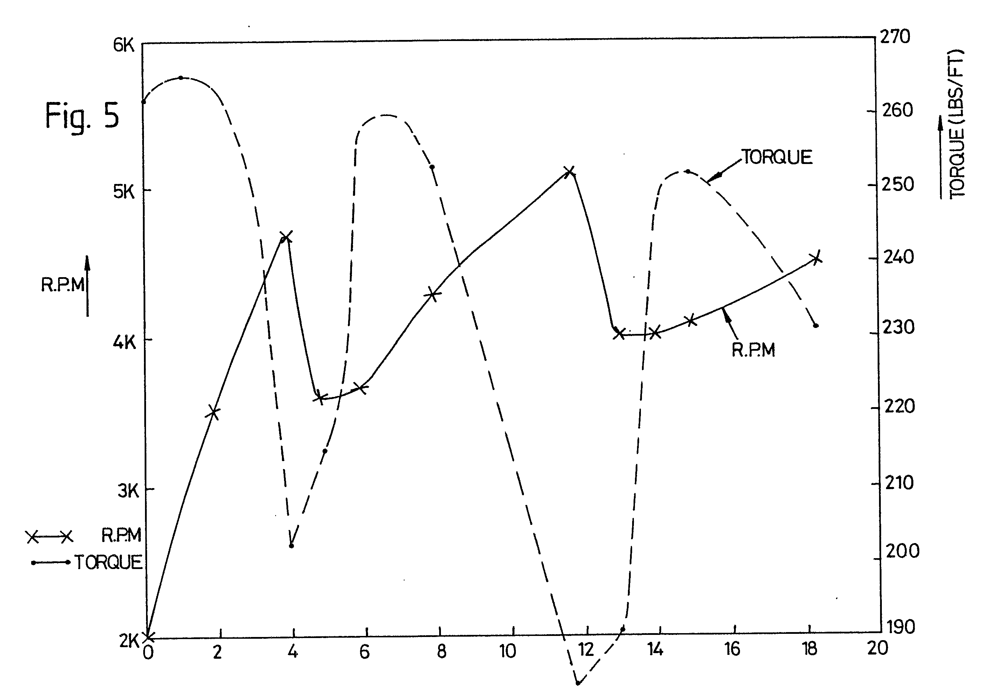

With reference now to Figures 4 and 5 the effects can be seen. In Figure 4 with standard ignition settings the torque at a time 5 seconds along the axis following the initiation of a gear change at 4 seconds is 260 lbs/ft whereas in Figure 5 it is only 205 lbs/ft. The peak torque in Figure 5 at 7 seconds rises to only 260 lbs/ft and the rise is less rapid thereby imposing much less stress on the engine and transmission components. Similar effects may be seen for other gear changes.

In preferred embodiment, to prevent erroneous operation of the system a number of consecutive engine period comparisons will be used to confirm that engine deceleration is above preset value. Up to several repetitions of the relevant flow chart section 20, 30, 40 and 50-60-70 may be required before the ignition is retarded.

To provide greater flexibility of operation the thresholds of manifold pressure 30 and/or throttle angle 40 and/or temperature may be varied in dependence on engine speed. In one version these values may be stored as a map in ROM (not shown) which is addressed by engine speed.

The delay 90 before ignition re-instatement begins (currently 250 milliseconds) may be varied with engine/gearbox temperature.

A hot engine/gearbox may not require such a long delay to complete the gear change and conversely a cold engine may require longer.

## Claims

1. An engine torque control system including means for monitoring engine deceleration and means for sensing at least one engine variable characterised in that the system includes means for producing a control output to cause a reduction in engine torque only when the engine deceleration exceeds a predetermined value and the engine variable is outside a predetermined safety limit.

2. An engine torque control system as claimed claim 1 characterised in that the means for monitoring engine deceleration comprises means for measuring the time taken for at least a first revolution or revolutions of the engine, means for measuring the time taken for a later revolution or revolutions of the engine, means for subtracting the time of the first revolution or revolutions from the time of the second revolution or revolutions to generate a time difference signal and means for comparing the generated time difference signal with a preset time difference signal and means for generating a control signal indicating that the engine deceleration exceeds the predetermined value only if the generated time difference signal exceeds the preset time difference signal.

3. An engine torque control system as claimed in claim 1 or claim 2 characterised in that the engine variable comprises engine speed and in that the predetermined safety limit is an engine speed below which the reduction in engine torque is not allowed.

4. An engine torque control system as claimed in claim 1 or claim 2 characterised in that the engine variable comprises engine temperature and in that the predetermined safely limit is an engine temperature below which the reduction in engine torque is not allowed.

5. An engine torque control system as claimed in claim 1 or claim 2 characterised in that the engine variable comprises throttle setting and in that the predetermined safety limit is a a throttle angle setting below which the reduction in engine torque is not allowed.

6. An engine torque control system as claimed in claim 1 or claim 2 characterised in that the engine variable comprises manifold pressure and in that the predetermined safely limit is a manifold pressure below which the reduction in engine torque is not allowed.

7. An engine torque control system as claimed in claim 1 or claim 2 characterised in that the engine variable comprises engine speed, engine temperature, throttle setting or manifold pressure and in that the reduction in engine torque is only allowed if two or more of these variables exceeds a predetermined value.

8. A method for generating a torque reduction signal for activating torque reducing apparatus in an internal combustion engine of a vehicle equipped with automatic transmission during a gear shifting operation of the automatic transmission comprising the steps of generating a first signal the value of which changes in correspondence to an engine variable, comparing the value of the first signal with a first preset limit, generating in response to engine speed a second signal which changes in correspondence to the deceleration experienced by the engine during a gear shifting operation of the automatic transmission, comparing the value of the second signal with a second preset limit, generating a torque reduction signal only if the value of the first signal falls outside the first preset limit and if the second signal falls outside the second preset limit.

9. A method for generating a torque reduction signal as claimed in claim 8 characterised in that the method comprises comparing a plurality of further signals the values of which respectively change in correspondence with a plurality of further engine variables, each signal being compared with a respective preset limit and an engine torque reduction signal being generated only when both said first signal and all of the respective plurality of further signals fall outside their respective preset limits, and when the signal representative of the deceleration of the engine falls outside the second preset limit.

10. A method as claimed in claim 9 characterised in that the plurality of engine variables comprises engine speed, throttle setting, manifold pressure, engine water temperature or ambient air temperature.

**R.P.M**

**T0  T1**

**TIME (SECONDS)**

# Fig.1

TP

TORQUE

RP.M ⟶

(a)

+6
+4
+2  MANIFOLD
0  PRESSURE
−2  (mm Hc)
−4
−6

TORQUE

RP.M ⟶

(b)

(OPEN) 0°

THROTTLE
ANGLE

MAX POWER

TA1

(c)

(CLOSE) 90°

ES1        RP.M ⟶

Fig. 2

START —10

N ◇ R.P.M PERIOD >X' —20

Y

N ◇ MANIFOLD PRESSURE >X" —30

Y

N ◇ THROTTLE ANGLE >X''' —40

Y

STORE REVOLUTION PERIOD (N) —50

STORE REVOLUTION PERIOD (N+1) —60

N ◇ N+1 >N —65

Y

N ◇ N+1−N >D —70

Y

N ◇ HAS TRIGGER BEEN RECEIVED TWICE —75

RETARD IGNITION TIMING —80

DELAY —90

RE-INSTATE AT X°/REV —100

WAIT —110

Fig. 3

EP 0 352 051 A2

Fig. 4

Fig. 5